# EUROPÄISCHE PATENTANMELDUNG

(11) **EP 0 983 832 A1**
(43) Veröffentlichungstag der Anmeldung: **08.03.2000**
(21) Anmeldenummer: 99113974.2
(22) Anmeldetag: 17.07.1999
(51) Int. Cl.: B29C 33/22, B29C 45/68

(54) **Verfahren und Vorrichtung zum Schliessen und Öffnen des Werkzeuges einer Kunststoffverarbeitungsmaschine**

(30) Priorität: 01.09.1998 DE 19839700
(71) Anmelder: Fischer - W. Müller Blasformtechnik GmbH, 53842 Troisdorf-Spich (DE)
(72) Erfinder: Döhmen, Willi, 41065 Mönchengladbach (DE); Jostes, Rolf, 53757 St. Augustin (DE); Stocksiefen, Raimund, 53844 Troisdorf (DE); Wehrens, Dirk, 53757 St. Augustin (DE)
(74) Vertreter: Valentin, Ekkehard, Dipl.-Ing.

(57) **Zusammenfassung**

Ein Verfahren zum Schließen und Öffnen des Werkzeugs (5) einer Kunststoffverarbeitungsmaschine, insbesondere einer Blasformmaschine, für deren mindestens zweiteilige Werkzeugform je Werkzeughälfte eine Formaufspannplatte (3,4) vorhanden ist, die von mindestens einem elektrischen Antrieb (6,106,206) mit zumindest einer Spindel (10) über einen großen Hub aus einer offenen Entform-Position in eine nahezu geschlossene Arbeitsposition und umgekehrt bewegt werden sowie von wenigstens einer hydraulischen Kolben-Zylinder-Einheit (14) über einen kleinen Hub in die vollständig geschlossene Arbeitsposition, und umgekehrt bewegt werden, wobei die Schließantriebe (6,13) an eine gemeinsame Steuerung oder Regelung angeschlossen sind, die mit einem Wegaufnehmer (8) des Werkzeugs (5) bzw. der Formaufspannplatten (3,4) zusammenwirkt, ermöglicht einen Kraftaufbau ohne ein Verkanten des Werkzeugs bzw. der Formaufspannplatten, wenn ab dem Übergangszeitpunkt von der elektrischen Verfahrbewegung auf die hydraulische Schließbewegung die beiden Bewegungen derart voneinander getrennt werden, daß während der hydraulisch erreichten vollständigen Schließbewegung von der Spindel des elektrischen Antriebs weitestgehend kein Krafteinfluß auf die Formaufspannplatten bewirkt wird. Bei einer Ausführung der Vorrichtung kann hierzu die Spindel (10) des elektrischen Antriebs (6) in mindestens einer mit einem Schiebesitz (18) ausgebildeten Mutter (11a,11b) angeordnet sein.

## Beschreibung

Die Erfindung betrifft ein Verfahren und eine Vorrichtung zum Schließen und Öffnen des Werkzeugs einer Kunststoffverarbeitungsmaschine, insbesondere einer Blasformmaschine, für deren mindestens zweiteilige Werkzeugform je Werkzeughälfte eine Formaufspannplatte vorhanden ist, die von mindestens einem elektrischen Antrieb mit zumindest einer Spindel über einen großen Hub aus einer offenen Entform-Position in eine nahezu geschlossene Arbeitsposition und umgekehrt bewegt werden sowie von wenigstens einer hydraulischen Kolben-Zylinder-Einheit über einen kleinen Hub in die vollständig geschlossene Arbeitsposition, in der die Formaufspannplatten verriegelt sind, und umgekehrt bewegt werden, wobei die Schließantriebe an eine gemeinsame Steuerung oder Regelung angeschlossen sind, die mit einem Wegaufnehmer des Werkzeugs bzw. der Formaufspannplatten zusammenwirkt.

Bei der Öffnungs- und Schließbewegung tritt bei Maschinen dieser Art das Problem auf, daß selbst durch eine schwierige Abstimmung der Wege bzw. Geschwindigkeiten der elektrischen Antriebsseite und der hydraulischen Verriegelungsseite ein Verkanten nicht auszuschließen ist bzw. sich nur recht umständlich sowie aufwendig mit steuerungstechnischen Maßnahmen erreichen läßt, dabei aber dennoch störanfällig ist. Damit sich zwei getrennte, nicht miteinander gekoppelte Regelkreise, die über den Wegaufnehmer mit dem Ist-Wert versorgt werden, vermeiden lassen, ist es durch die DE 195 16 125 C1 bekanntgeworden, das alle Schließantriebe zum Schließen des Werkzeugs mit großer Kraft von einer gemeinsamen Steuerung oder Regelung angesteuert werden. Wenngleich als Alternative für die Antriebsseite, d.h. den Verfahrhub der beweglichen Formspannplatte ein elektrischer Antrieb erwähnt wird, geschieht dies bei der bekannten Blasformmaschine mit hydraulischen Antrieben sowohl für das Verfahren der Formaufspannplatte mit dem großen Hub als auch das Schließen der Formaufspannplatten mit dem kleinen Hub. Hierbei wird mit einer hydraulischen Schaltung erreicht, daß ein sanfter Übergang von der Fahrbewegung in die Schließbewegung stattfindet. Dazu wird nach der Verriegelung der beiden Formaufspannplatten den beiden hydraulischen Kolben-Zylinder-Einheiten über einen Zufluß ein definierter Hydraulikstrom zugeführt. Der Zufluß und der Abfluß sind mit einer Leitung verbunden, in der ein Rückschlagventil so angeordnet ist, daß Hydrauliköl vom Abfluß zum Zufluß strömen kann, sofern entsprechende Druckverhältnisse herrschen. Der Abfluß steht über ein auf einen gewünschten Ansprechdruck eingestelltes Druckventil mit einem Hydrauliktank in Verbindung. Durch das Zuführen eines definierten Hydraulikstroms nach dem Verriegeln wird ein allmählich sanfter Kraftaufbau im Schließantrieb erzeugt.

Der Erfindung liegt die Aufgabe zugrunde, ein Verfahren und eine Vorrichtung der eingangs genannten Art zu schaffen, die bei der Verwendung eines elektrischen Verfahrantriebs und eines hydraulischen Schließ- bzw. Verriegelungsantriebs einen Kraftaufbau ohne ein Verkanten des Werkzeugs bzw. der Formaufspannplatten erlauben.

Diese Aufgabe wird erfindungsgemäß mit einem Verfahren dadurch gelöst, daß ab dem Übergangszeitpunkt von der elektrischen Verfahrbewegung auf die hydraulische Schließbewegung die beiden Bewegungen derart voneinander getrennt werden, daß während der hydraulisch erreichten vollständigen Schließbewegung von der Spindel des elektrischen Antriebs weitestgehend kein Krafteinfluß auf die Formaufspannplatten bewirkt wird. Indem somit die Bewegungen der beiden Schließantriebe (elektrischer sowie hydraulischer Antrieb) entkoppelt werden, bedarf es keiner aufwendigen Synchronisierungsmaßnahmen, denn sobald der in der Regel frequenzgeregelte elektrische Antriebsmotor den großen Verfahrhub bewältigt hat, wird durch die erfindungsgemäße Trennung der Bewegungen in der Folge die Schließkraft ausschließlich nur noch über die hydraulischen Kolben-Zylinder-Einheiten aufgebracht, ohne daß der elektrische Antrieb noch einen Einfluß nehmen kann. Es bedarf daher auch keiner ansonsten ein jedes Mal erforderlichen Neu-Einstellung der Abstimmung, wenn mit der Maschine auf die Herstellung von Artikeln mit anderer Größe bzw. Abmessung übergegangen wird.

Eine bevorzugte Ausgestaltung des erfindungsgemäßen Verfahrens sieht vor, daß die Geschwindigkeit des elektrischen Antriebs bei der vollständigen Schließbewegung kleiner oder allenfalls gleich der des Hydraulikantriebs und beim Öffnen des Werkzeugs größer oder allenfalls gleich der des Hydraulikantriebs vorgewählt wird, was regelungstechnisch kein Problem darstellt. Diese Maßnahme empfiehlt sich bei einer ersten konstruktiven Ausführung zur Lösung der der Erfindung zugrundeliegenden Aufgabe, demgemäß nämlich die Spindel des elektrischen Antriebs vorzugsweise in mindestens einer mit einem Schiebesitz ausgebildeten Mutter angeordnet ist. Die Entkopplung der Bewegungen läßt sich hierbei in einfacher Weise über eine entsprechende Spielvorgabe des Schiebesitzes erreichen. Der Verfahrensablauf ist dabei so, daß sich die Mutter (bzw. die Muttern) zunächst in ihrer - am Beispiel einer Blasformmaschine - blasformseitigen, d.h. hinteren Anschlagposition befindet und die bewegliche Formaufspannplatte durch die Drehbewegung der elektrisch angetriebenen Spindel den großen Verfahrweg zum Schließen des Werkzeugs zurücklegt. Nach dem Verriegeln der beiden Formaufspannplatten wird der weitere Schließweg bis zum Verpressen bzw. der Schweißnahtbildung, d.h. dem Abquetschen des Blasformschlauches und damit dem vollständigen Schließen des Werkzeugs von den hydraulischen Kolben-Zylinder-Einheiten übernommen, wobei deren höhere Geschwindigkeit in dieser Bewegung ein Verschieben der Formaufspannplatten relativ zur Mutter zuläßt. Die beim Blasformen üblich lange Blaszeit läßt sich dann ausnutzen, um während dieser Zeit mittels des elektrischen Antriebes den vom Spiel des Schiebesitzes vorgegebenen Verstellweg in entgegengesetzter Richtung zu überbrücken und die Mutter in die schließplattenseitige, d.h. vordere Anschlagposition zu bringen. Mit der nach dem Ende der Öffnungsbewegung größeren Geschwindigkeit des elektrischen Antriebes wird wiederum eine Totzeit genutzt, nämlich die zum Entformen notwendige Zeit des Blasformverfahrens, um den elektrischen Antrieb wieder in die Anschlagposition blasformseitig der Mutter zu bringen.

Durch ein nach einem Vorschlag der Erfindung im Mutterngehäuse jeweils angeordnetes Federpaket läßt sich der erforderliche Gleichlauf und damit ein konstantes v(t) beim Schließen und Öffnen erreichen, d.h. die Werkzeuge bzw. die beiden Formaufspannplatten in gleicher Weise bewegt werden, wie die mit der Spindel verbundenen unteren Schlitten.

Nach einem anderen Vorschlag der Erfindung ist der die Antriebsspindel beaufschlagende elektrische Antrieb als Getriebemotor ausgebildet und über eine elektrisch schaltbare, an die Maschinenregelung oder -steuerung angeschlossene Kupplung mit der Spindel verbunden. Sobald die Verriegelungs-Wegmarke erreicht ist, erhalten die hydraulischen Kolben-Zylinder-Einheiten, die während des Verfahrens der beweglichen Formaufspannplatte mittels des elektrischen Antriebs in die Verriegelungsposition ebenfalls schon mit sehr geringer Geschwindigkeit verfahren werden, ein Verriegelungssignal, und gleichzeitig wird die Kupplung der Spindel geschaltet, worauf der elektrische Antrieb nur noch leer mitläuft, die Spindel aber weiter mitdreht und damit den Gleichlauf gewährleistet. Die Kolben-Zylinder-Einheiten bewirken damit unabhängig von dem Motor die Schließ- bzw.Öffnungsbewegung.

Bei einer als Antriebsspindel vorteilhaft eingesetzten Kugelgewindespindel läßt sich deren kleine Reibung und große Links-Rechtssteigung ausnutzen, um durch die lineare Bewegung bei der Schließkraftaufbringung mitgeschleppt zu werden.

Nach einer anderen Ausführung der Erfindung ist der die Antriebsspindel beaufschlagende elektrische Motor als getriebeloser Direktantrieb ausgebildet und über die Maschinensteuerung oder -regelung mit in den Verriegelungsstücken der hydraulischen Kolben-Zylinder-Einheiten angeordneten Endschaltern verknüpft. Hierbei sorgt ein als Direktantrieb vorzugsweise eingesetzter Servomotor auch bei kleinen Drehzahlen für ein ausreichend hohes Moment. Ein solcher Direktantrieb bietet abgesehen von einem nicht benötigten Getriebe den Vorteil der Verwendung einer einfachen, elastischen, d.h. nicht elektrisch schaltbaren Kupplung. Die internen Endschalter der Verriegelungsstücke geben mit dem Erreichen der Verriegelungsposition ein Signal an die Maschinensteuerung, worauf der elektrische Antrieb während der ab diesem Zeitpunkt einsetzenden völligen Schließbewegung mittels der Kolben-Zylinder-Einheiten stromlos geschaltet wird und nur noch leer mitläuft. Die weiterhin mitdrehende Spindel sorgt auch in diesem Fall für den nötigen Gleichlauf der Blasformhälften.

Eine Ausgestaltung der Erfindung sieht vor, daß der Wegaufnehmer an der Schließplatte, d.h. der Formaufspannplatte angeordnet ist. Bei dieser von der Zuordnung des Wegaufnehmers an dem elektrischen Verfahrantrieb abweichenden Variante lassen sich aufgrund des Rotationsträgheitsmomentes der Spindel möglicherweise resultierende Verformungen zwischen dem oberen, hydraulischen Schließsystem und dem unteren, elektrischen Verfahrsystem gegebenenfalls besser berücksichtigen, da sich der Wegaufnehmer unmittelbar am Ort des Geschehens befindet, d.h. den sich aufgrund des Rotationsträgheitsmomentes gegebenenfalls geringfügig verkantenden Formaufspannplatten.

Weitere Einzelheiten und Vorteile der Erfindung ergeben sich aus den Patentansprüchen und der nachfolgenden Beschreibung, in der Ausführungsbeispiele des Gegenstandes der Erfindung näher erläutert sind. Es zeigen:
- Fig. 1: schematisch den Aufbau einer Blasformmaschine mit zwei aufeinanderzuund voneinanderwegbewegbaren Formaufspannplatten, als Gesamtansicht in der geschlossenen Arbeitsposition dargestellt;
- Fig. 2: als Einzelheit der Fig. 1 den dort gestrichelten, mit "X" gekennzeichneten elektrischen Verfahrantrieb im Bereich der vorderen, schließseitigen Formaufspannplatte;
- Fig. 3: eine schematische Gesamtansicht einer anderen Ausführung einer Blasformmaschine mit einer gegenüber der Fig. 1 zwischen dem Getriebemotor und der Antriebsspindel angeordneten elektrisch schaltbaren Kupplung; und
- Fig. 4: eine schematische Gesamtansicht einer weiteren Ausführung einer Blasformmaschine mit einem der Antriebsspindel zugeordneten Direktantrieb.

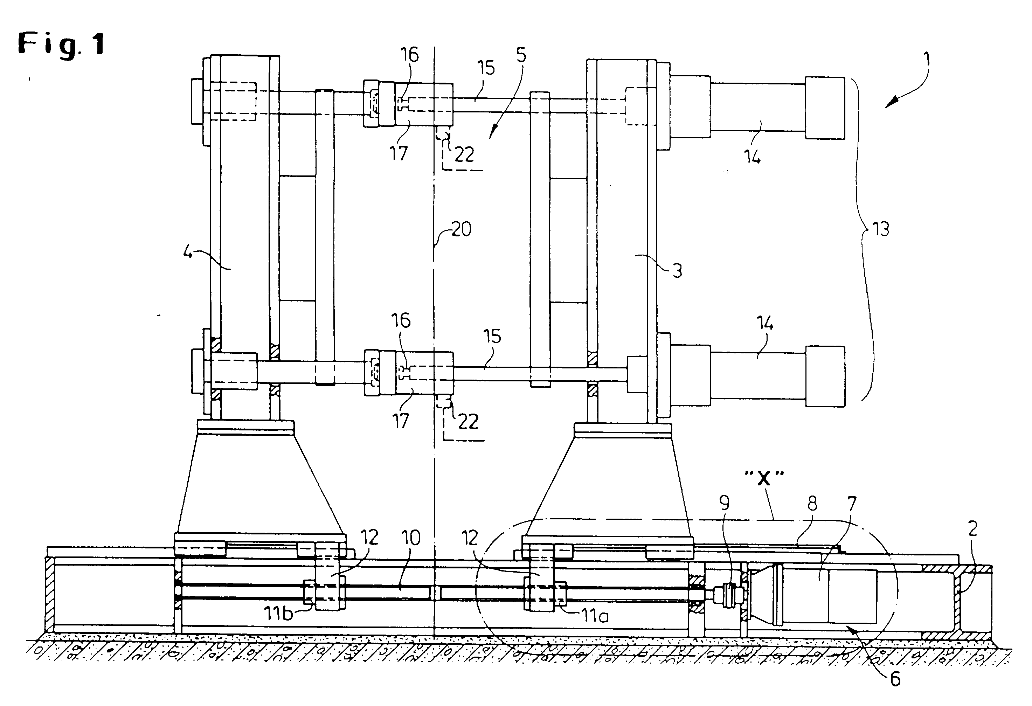

Die Blasformmaschine 1 gemäß Fig. 1 besitzt zwei auf einem mit dem Fundament verankerten Grundrahmen 2 bewegliche Formaufspannplatten 3, 4. Sowohl die vordere Formaufspannplatte 3 als auch die hintere Formaufspannplatte 4 trägt eine aus zeichnerischen Gründen nicht dargestellte Werkzeughälfte eines zweiteiligen Blasformwerkzeuges 5. Weiterhin nicht dargestellt ist ein Speicherkopf oder dergleichen, der Blasform-Vorformlinge herstellt und diese von oben in den Werkzeugbereich abgibt, wo sie durch Blasformen in bekannter Weise zu einem fertigen Artikel weiterbearbeitet werden.

Zum Blasformen einerseits und zum Entformen des fertigen Artikels andererseits werden die Formaufspannplatten 3, 4 symmetrisch auf- und zubewegt. Die Fahrbewegung von der geöffneten Entform-Position bis in die geschlossene Position - die noch nicht der in Fig. 1 gezeigten vollständig geschlossenen Arbeitsposition entspricht - wird durch einen Verfahr- bzw. Schließantrieb 6 in Form eines Getriebemotors 7 erreicht, dessen jeweiliger Fahrweg durch einen Wegaufnehmer 8 erfaßt und einer - nicht gezeigten - Maschinensteuerung übermittelt wird. Der Getriebemotor 7 ist über eine Kupplung 9 mit einer Antriebsspindel 10 verbunden, die mit ihren Enden einerseits drehbeweglich gelagert und andererseits in mit einem Schiebesitz ausgebildeten Muttern 11a, 11b angeordnet ist; diese werden von Tragarmen 12 aufgenommen, die mit den Formaufspannplatten 3, 4 verbunden sind und die Rotation der Antriebsspindel 10 als lineare, gleichsinnige Verstellbewegung an die beiden Formaufspannplatten 3, 4 weiterleiten.

Der den großen Hub bzw. Verfahrweg bewirkende elektrische Verfahrantrieb 6 wird durch einen den kleinen Hub in die vollständig geschlossene Arbeitsposition des Werkzeugs 5 bewirkenden Schließantrieb 13 ergänzt, der aus zwei an die vordere Formaufspannplatte 3 angeflanschten Kolben-Zylinder-Einheiten 14 besteht, die über kurze Wege hohe Schließkräfte erzeugen. Zur Übertragung der Schließkraft wird das Werkzeug 5 verriegelt, wozu die Kolbenstangen 15 der Zylinder-Einheiten 14 an ihrem freien Stangenende mit einem Riegelkopf 16 ausgebildet sind, der in ein komplementäres Verriegelungsstück 17 der gegenüberliegenden, hinteren Formaufspannplatte 4 eingreift und nach dem Einrasten das Verriegelungsstück 17 kraftschlüssig fixiert.

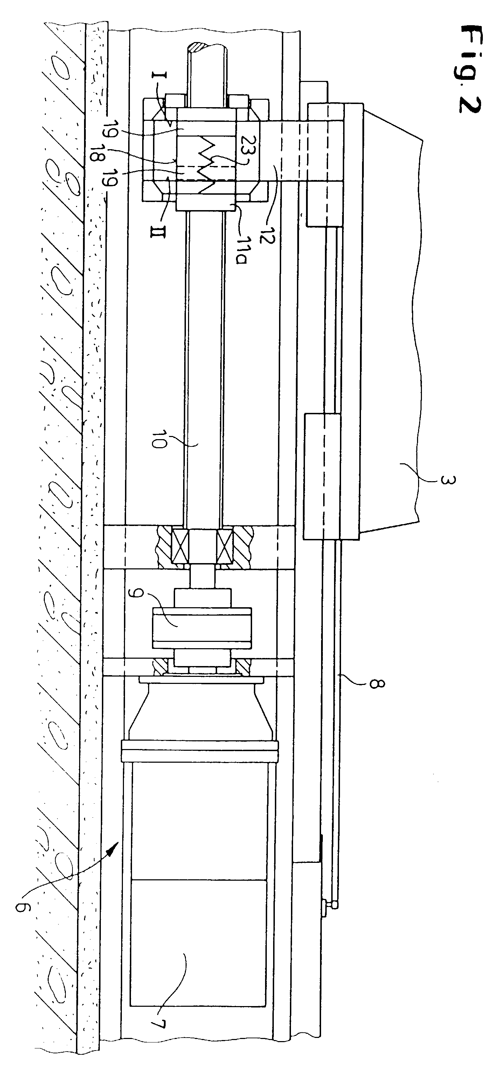

Zum Verstellen der Formaufspannplatten 3, 4 in die in Fig. 1 gezeigte Arbeits- bzw. Blasposition werden die Formaufspannplatten 3, 4 aus der nicht dargestellten, offenen Entform-Position, in der die Formaufspannplatten 3, 4 ausreichend entfernt voneinander liegen, mittels des elektrischen Verfahrantriebs 6 aufeinanderzubewegt. Die Muttern 11a, 11b, deren Schiebesitz 18 entsprechend dem für den Schließkraftaufbau mittels des hydraulischen Schließantriebs 13 benötigten Weg ausgelegt ist, besitzen einen integrierten Anschlag 19 und weisen, wie näher in Figur 2 gezeigt wird, eine definierte blasformseitige bzw. schließplattenseitige - in der der Anschlag 19 seine von der Mittelachse 20 (vgl. Fig. 1) des Schließmechanismus entfernte und damit eine von der zeichnerischen Darstellung abweichende, nicht gezeigte hintere Lage einnimmt - Anschlagposition I bzw. II auf. In der blasformseitigen Anschlagposition I der Muttern 11a, 11b wird die Drehbewegung der Antriebsspindel 10 in die lineare Verstellbewegung zum gleichsinnigen Bewegen der Formaufspannplatten 3, 4 über den großen Hub bzw. Weg bis in die nahezu geschlossene Arbeitsposition des Werkzeuges 5 umgewandelt. Sobald diese erreicht ist und die Formaufspannplatten 3, 4 miteinander verriegelt sind, übernehmen die Kolben-Zylinder-Einheiten 14 das vollständige Schließen des Werkzeugs 5 bis zum Verpressen bzw. der Schweißnahtbildung des zuvor in das Werkzeug 5 eingeführten Rohlings bzw. Blasformschlauchs.

Einhergehend mit der Übernahme der Schließbewegung durch den hydraulischen Schließantrieb 13 wird mittels der Maschinensteuerung die Geschwindigkeit des Getriebemotors 7 gegenüber der Bewegung der Kolben-Zylinder-Einheiten 14 verringert oder höchstens gleich der des hydraulischen Schließantriebs 13 vorgewählt, so daß sich die Formaufspannplatten 3, 4 relativ zu den Muttern 11a, 11b verschieben, d.h. die Drehbewegung der Antriebsspindel 10 ist fortan wirkungslos und wird von der Stellbewegung des hydraulischen Schließantriebs 13 überlagert. Der Anschlag 19 verlagert sich dabei entsprechend dem für den Schließkraftaufbau erforderlichen Weg gegen die Kraft einer den Gleichlauf der Bewegungen der beiden Formaufspannplatten 3, 4 unterstützenden, in den Muttern 11a, 11b jeweils integrierten Feder 23 hin in Richtung auf die schließplattenseitige Anschlagposition II. Während der beim Blasformen üblichen langen Blaszeit werden die Muttern 11a, 11b mittels des elektrischen Verfahrantriebes 6 dann endgültig in die schließplattenseitige Anschlagposition II verfahren, die benötigt wird, um nach dem Abbau der Schließkraft und damit der Übernahme durch den elektrischen Verfahrantrieb 6 zum Zurücklegen des großen Öffnungshubes sofort die Drehbewegung der Antriebsspindel 10 für diesen Verstellhub ausnutzen zu können. Mit Beendigung des Öffnungshubes wird dann die zum Entformen notwendige Zeit genutzt, um den elektrischen Verfahrantrieb 6 sogleich wieder in dei blasformseitige Anschlagposition I der Muttern 11a, 11b zu bringen, in der der Anschlag 19 aus seiner in Fig. 2 gestrichelten Lage wieder in die mit durchgezogenen Linien in Fig. 2 gezeigte Lage der blasformseitigen Anschlagposition I gelangt, aus der heraus ohne Zeitverlust dann sofort wieder der große Schließhub eingeleitet werden kann.

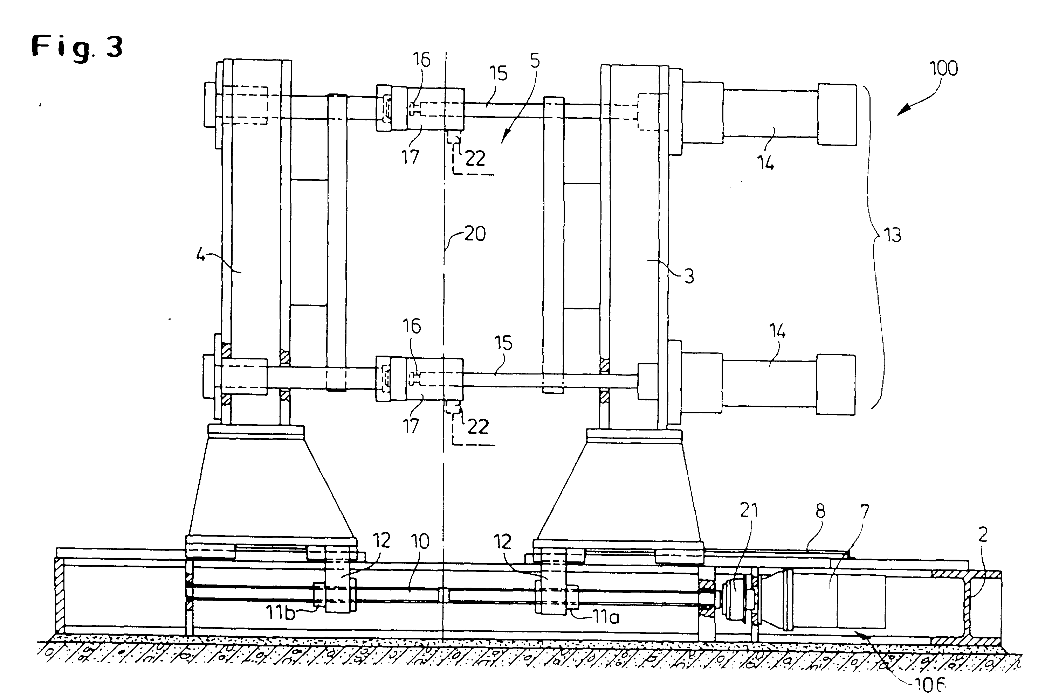

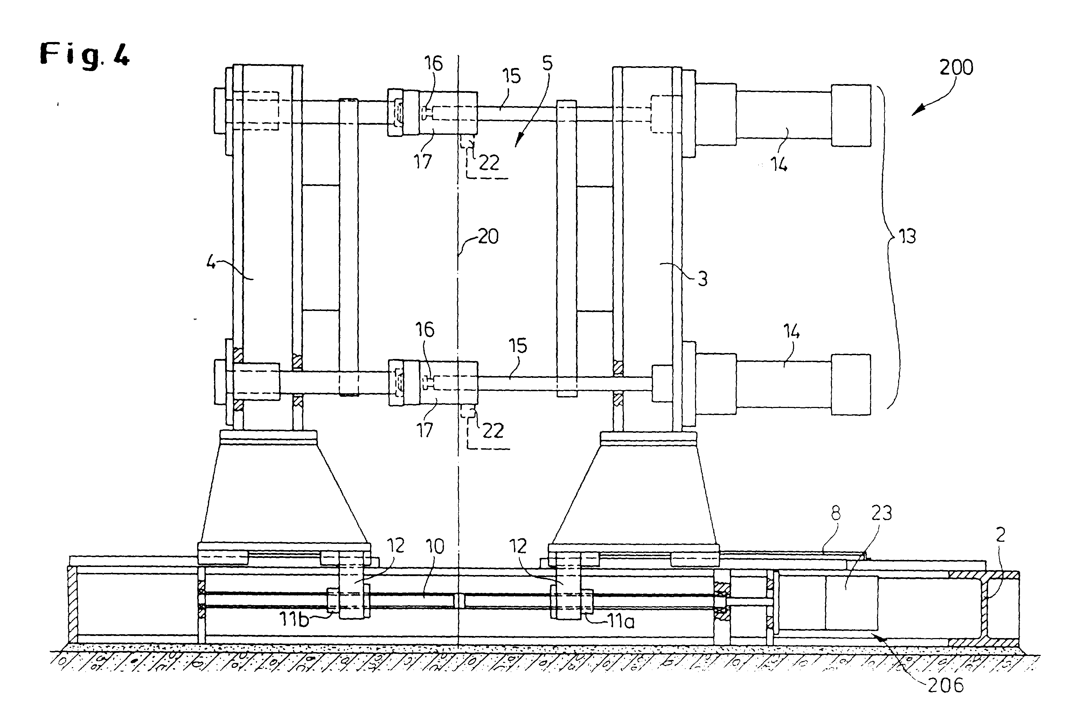

Die in den Fig. 3 und 4 dargestellten weiteren Ausführungen einer Blasformmaschine 100 bzw. 200 unterscheiden sich in ihrem grundsätzlichen Aufbau nicht von der Blasformmaschine 1, so daß gleiche Bauteile mit denselben Bezugsziffern versehen sind. Anders sind hierbei allerdings die elektrischen Verfahrantriebe 106 bzw. 206 ausgebildet, wie auch das mit Anschlägen versehene bzw. definierte Spiel in den Muttern 11a, 11b entfällt. Der Getriebemotor 7 der Blasformmaschine 100 nach Fig. 3 ist nämlich über eine elektrisch schaltbare, an die Maschinenregelung oder -steuerung angeschlossene Kupplung 21 mit der zudem als Kugelgewindespindel ausgebildeten Antriebsspindel 10 verbunden. Mit dem Verriegeln der Formaufspannplatten 3, 4 geht in diesem Fall von in den Verriegelungsstücken 17 angeordneten, lediglich schematisch als Black-Box angedeuteten internen Endschaltern 22 ein Signal an die Maschinensteuerung und von dieser an die elektrische Kupplung 21, die daraufhin von der Antriebsspindel 10 getrennt wird, so daß der Getriebemotor 7 nur noch leer mitläuft. Die Spindel 10 dreht bei diesen Ausführungen aber weiter mit und sichert damit den Gleichlauf der Werkzeuge bzw. Formaufspannplatten 3, 4, da die Kugelgewindespindel 10 durch die lineare Bewegung bei der Schließkraftaufbringung über die Kolben-Zylinder-Einheiten 14, d.h. von dem Schließantrieb 13 mitgeschleppt wird. Zum Öffnen des Werkzeugs 5 und Verfahren der Formaufspannplatten 3, 4 in die Entformposition wird die elektrische Kupplung 21 einfach wieder zugeschaltet.

Die Blasformmaschine 200 gemäß Fig. 4 besitzt keinen Getriebemotor mehr, sondern ist stattdessen mit einem getriebelosen Direktantrieb 23 versehen, der über eine einfache, elastische Kupplung 24 mit der Antriebsspindel 10 verbunden ist. Bei Erreichen der Verriegelungsposition geht auch in diesem Fall von den internen Endschaltern 22 der Verriegelungsstücke 17 über die Maschinensteuerung ein Signal an den Direktantrieb 23, der daraufhin stromlos geschaltet wird und nur noch leer mitläuft. Die als Antriebsspindel 10 eingesetze Kugelgewindespindel wird bei der Schließkraftaufbringung mittels der Kolben-Zylinder-Einheiten 14 des hydraulischen Schließantriebs 13 bis zum Erreichen der vollständig geschlossenen Arbeitsposition der Formaufspannplatten 3, 4 wiederum mitgeschleppt und damit der Gleichlauf der beiden Formaufspannplatten 3, 4 sichergestellt. Allen Ausführungen ist gemeinsam, daß durch die Entkopplung der Bewegungen ein problemloser Übergang vom elektrisch bewirkten Bewegungsablauf in den hydraulisch bewirkten Bewegungsablauf stattfindet.

## Patentansprüche

1. Verfahren zum Schließen und Öffnen des Werkzeugs einer Kunststoffverarbeitungsmaschine, insbesondere einer Blasformmaschine, für deren mindestens zweiteilige Werkzeugform je Werkzeughälfte eine Formaufspannplatte vorhanden ist, die von mindestens einem elektrischen Antrieb mit zumindest einer Spindel über einen großen Hub aus einer offenen Entform-Position in eine nahezu geschlossene Arbeitsposition und umgekehrt bewegt werden sowie von wenigstens einer hydraulischen Kolben-Zylinder-Einheit über einen kleinen Hub in die vollständig geschlossene Arbeitsposition, in der die Formaufspannplatten verriegelt sind, und umgekehrt bewegt werden, wobei die Schließantriebe an eine gemeinsame Steuerung oder Regelung angeschlossen sind, die mit einem Wegaufnehmer des Werkzeugs bzw. der Formaufspannplatten zusammenwirkt,
**dadurch gekennzeichnet,**
daß ab dem Übergangszeitpunkt von der elektrischen Verfahrbewegung auf die hydraulische Schließbewegung die beiden Bewegungen derart voneinander getrennt werden, daß während der hydraulisch erreichten vollständigen Schließbewegung von der Spindel (10) des elektrischen Antriebs (6, 106, 206) weitestgehend kein Krafteinfluß auf die Formaufspannplatten (3, 4) bewirkt wird.

2. Verfahren nach Anspruch 1,
**dadurch gekennzeichnet,**
daß die Geschwindigkeit des elektrischen Antriebes (6) bei der vollständigen Schließbewegung kleiner oder allenfalls gleich der des Hydraulikantriebs (13; 14) und beim Öffnen des Werkzeugs (5) größer oder allenfalls gleich der des Hydraulikantriebs (13; 14) eingestellt wird.

3. Vorrichtung zum Durchführen des Verfahrens nach Anspruch 1 oder 2, die zum Schließen und Öffnen des Werkzeugs (5) einer Kunststoffverarbeitungsmaschine, insbesondere einer Blasformmaschine (1, 100, 200), für deren mindestens zweiteilige Werkzeugform je Werkzeughälfte eine Formaufspannplatte (3, 4) aufweist, die von mindestens einem elektrischen Antrieb (6, 106, 206) mit zumindest einer Spindel (10) über einen großen Hub aus einer offenen Entform-Position in eine nahezu geschlossene Arbeitsposition und umgekehrt bewegt werden sowie von wenigstens einer hydraulischen Kolben-Zylinder-Einheit (14) über einen kleinen Hub in die vollständig geschlossene Arbeitsposition, in der die Formaufspannplatten (3, 4) verriegelt sind, und umgekehrt bewegt werden, wobei die Schließantriebe (6; 13) an eine gemeinsame Steuerung oder Regelung angeschlossen sind, die mit einem Wegaufnehmer (8) des Werkzeugs (5) bzw. der Formaufspannplatten (3, 4) zusammenwirkt,
**dadurch gekennzeichnet,**
daß die Spindel (10) des elektrischen Antriebs (6) in mindestens einer mit einem Schiebesitz (18) ausgebildeten Mutter (11 a; 11b) angeordnet ist.

4. Vorrichtung nach Anspruch 3,
**gekennzeichnet durch**
ein im Gehäuse der Muttern (11a, 11b) angeordnetes Federpaket (20).

5. Vorrichtung zum Durchführen des Verfahrens nach Anspruch 1 oder 2, die zum Schließen und Öffnen des Werkzeugs (5) einer Kunststoffverarbeitungsmaschine, insbesondere einer Blasformmaschine (1, 100, 200), für deren mindestens zweiteilige Werkzeugform je Werkzeughälfte eine Formaufspannplatte (3, 4) aufweist, die von mindestens einem elektrischen Antrieb (6, 106, 206) mit zumindest einer Spindel (10) über einen großen Hub aus einer offenen Entform-Position in eine nahezu geschlossene Arbeitsposition und umgekehrt bewegt werden sowie von wenigstens einer hydraulischen Kolben-Zylinder-Einheit (14) über einen kleinen Hub in die vollständig geschlossene Arbeitsposition, in der die Formaufspannplatten (3, 4) verriegelt sind, und umgekehrt bewegt werden, wobei die Schließantriebe (6; 13) an eine gemeinsame Steuerung oder Regelung angeschlossen sind, die mit einem Wegaufnehmer (8) des Werkzeugs (5) bzw. der Formaufspannplatten (3, 4) zusammenwirkt,
**dadurch gekennzeichnet,**
daß der die Antriebsspindel (10) beaufschlagende elektrische Antrieb (106) als Getriebemotor (7) ausgebildet und über eine elektrisch schaltbare, an die Maschinenregelung oder -steuerung angeschlossene Kupplung (21) mit der Spindel (10) verbunden ist.

6. Vorrichtung zum Durchführen des Verfahrens nach Anspruch 1 oder 2, die zum Schließen und Öffnen des Werkzeugs (5) einer Kunststoffverarbeitungsmaschine, insbesondere einer Blasformmaschine (1, 100, 200), für deren mindestens zweiteilige Werkzeugform je Werkzeughälfte eine Formaufspannplatte (3, 4) aufweist, die von mindestens einem elektrischen Antrieb (6, 106, 206) mit zumindest einer Spindel (10) über einen großen Hub aus einer offenen Entform-Position in eine nahezu geschlossene Arbeitsposition und umgekehrt bewegt werden sowie von wenigstens einer hydraulischen Kolben-Zylinder-Einheiten (14) über einen kleinen Hub in die vollständig geschlossene Arbeitsposition, in der die Formaufspannplatten (3, 4) verriegelt sind, und umgekehrt bewegt werden, wobei die Schließantriebe (6; 13) an eine gemeinsame Steuerung oder Regelung angeschlossen sind, die mit einem Wegaufnehmer (8) des Werkzeugs (5) bzw. der Formaufspannplatten zusammenwirkt,
**dadurch gekennzeichnet,**
daß der die Antriebsspindel (10) beaufschlagende elektrische Motor als getriebeloser Direktantrieb (32) ausgebildet ist und über die Maschinensteuerung oder -regelung mit in den Verriegelungsstücken (17) der hydraulischen Kolben-Zylinder-Einheiten (14) angeordneten Endschaltern (22) verknüpft ist.

7. Vorrichtung nach Anspruch 6,
**gekennzeichnet durch**
einen als Direktantrieb (23) eingesetzten Servomotor.

8. Vorrichtung nach einem der Ansprüche 3 bis 7,
**dadurch gekennzeichnet,**
daß der Wegaufnehmer (8) an der Schließplatte (3) angeordnet ist.

9. Vorrichtung nach einem der Ansprüche 3 bis 8,
**gekennzeichnet durch**
eine als Antriebsspindel (10) eingesetzte Kugelgewindespindel.
